# EUROPEAN PATENT APPLICATION

(11) **EP 3 922 696 A1**
(43) Date of publication of application: **15.12.2021**
(21) Application number: 20796436.2
(22) Date of filing: 22.04.2020
(51) Int. Cl.: C09K 11/06, G01P 13/00

(54) **FLUORESCENT PARTICLES, INSPECTION DEVICE USING FLUORESCENT PARTICLES FOR VISUALIZING AND INSPECTING MOTION/MOVEMENT OF FLUID IN LOCATIONS WHERE FLUID IS PRESENT, AND INSPECTION METHOD USING FLUORESCENT PARTICLES FOR VISUALIZING AND INSPECTING MOTION/MOVEMENT OF FLUID IN LOCATIONS WHERE FLUID IS PRESENT**

(30) Priority: 23.04.2019 JP 2019082356
(71) Applicant: Central Techno Corporation, Osaka-shi, Osaka 541-0043 (JP)
(72) Inventor: MIYAHARA Akira, Osaka-shi Osaka 541-0043 (JP); HORIE Masaaki, Neyagawa-shi Osaka 572-8508 (JP)
(74) Representative: Manuel Illescas y Asociados, S.L.
(86) International application number: PCT/JP2020/017336
(87) International publication number: WO 2020/218337

(57) **Abstract**

[Problem] To provide: fluorescent particles that are used to create a fluorescent material for coating an object in the vicinity of a fluid, that move regularly in the fluid while suppressing halation generated by the objects, and that enable the motion/movement of the fluid to be sharply visualized; an inspection device; and an inspection method. [Solution] Substantially spherical fluorescent particles comprising a mixture containing at least one fluorescent material and a synthetic resin, wherein: the fluorescent material is excited by any purple visible light and UV rays having a wavelength of 290-405 nm, and emits visible light having a peak wavelength within the range of 410-620 nm; and the fluorescent particles have diameters of 100 nm to 1 mm and are distinguishable from bubbles and/or foreign bodies in the fluid when irradiated with the light.

## Description

### [FIELD OF THE INVENTION]

The present invention relates to fluorescent particles, an inspection device using the fluorescent particles for visualizing and inspecting fluid motion/movement in locations where fluid is present, and an inspection method using the fluorescent particles for visualizing and inspecting fluid motion/movement in locations where fluid is present.

### [BACKGROUND OF THE INVENTION]

The motion/movement of a fluid (gas or liquid) varies significantly depending on shapes of substances surrounding the fluid and so on.

In designing, for example, a screw, an aircraft, a car, and a vessel, etc., understanding by visualization how the motion/movement of the fluid surrounding these objects behaves will help decrease the friction between the object and the fluid, enabling more efficient designing. In addition, in the internal structure or a fluid path of a pump, visualizing stagnations and/or vortices in the flow enables a smoother fluid flow.

To visualize such motion/movement of the fluid, the method of blending tiny particles into the flow and tracing the motion of the particles is known.

The Japanese Patent Application No. 2008-180630 discloses a fluid measurement method which visualizes the fluid surrounding moving objects, such as vehicles. In the fluid measurement method in the Japanese Patent Application No. 2008-180630, a carbon-dioxide-generating device or a smoke-generating device is used as a floating-particles-generating device, and visible lights are irradiated from an irradiation means.

The Japanese Patent Application No. 1987-058130 discloses a method to visualize airflow by irradiating invisible lights. The Japanese Patent Application No. 1987-058130 describes the method using fluorescent fine powder, such as commercially available fluorescent paints or fluorescent powder, as the particles to blend into the fluid.
[Patent Document 1] Japanese Patent Application 2008-180630
[Patent Document 2] Japanese Patent Application S62-058130

### [SUMMARY OF THE INVENTION]

### [Problems to be solved by the Invention]

The fluid measurement method in the Japanese Patent Application No. 2008-180630 described above irradiates visible light as a light source, and thus, it is often accompanied by blurriness (halation) due to objects, not particles, strongly reflecting the visible light. Therefore, there was a problem where visualizing and observing the fluid motion/movement were difficult in the portions where halation occurred. Specifically in extreme proximity to the interface between the object and the fluid, observation was extremely difficult due to the halation.

Also, in order to remove the halation, an optical filter is often used. However, use of the optical filter posed another problem, as it also attenuated light reflected by the particles, causing poor visibility.

The method to visualize airflow in the Patent Document 2 uses fluorescent fine-powder, such as commercially available fluorescent paints or fluorescent powders, and invisible light. Such fluorescent fine-powder often has unequal sizes or crooked shapes, such as with crystal structures being cylindrical or concavo-convex. Blending the particles of unequal sizes or crooked shapes into a fluid induced irregular motion of each particle, and thus, caused a problem where fine visualization of the fluid motion/movement was not possible.

In addition, if fluorescent paint etc. is directly blended into the fluid, the crystals of the fluorescent paint will be subjected to external force and broken in the fluid. The broken crystals of the fluorescent paint are extremely small, and the object is painted with the broken crystals of the fluorescent paint. As the painted object was then excited by invisible light and emitted light, it was not possible to completely remove halation, and the observation at the interface was still difficult.

There is also another problem, that is, if an actual object is used for inspection, the object is painted with a paint, and the paint needs to be washed off after the inspection, although models may be used to visualize the fluid motion/movement in some inspections.

Thus, the present invention is attempted to solve these problems, and aims to provide fluorescent particles for finely visualizing the fluid motion/movement which move in a regular manner in the fluid, while preventing the object surrounding the fluid from getting painted with the fluorescent substance and suppressing halation caused by the object; an inspection device using the fluorescent particles for visualizing and inspecting the fluid motion/movement in locations where fluid is present; and an inspection method using the fluorescent particles for visualizing and inspecting the fluid motion/movement in locations where fluid is present.

### [Means for Solving the Problems]

The fluorescent particles in one aspect of the present invention pertain to fluorescent particles comprising a mixture including at least one fluorescent substance and a synthetic resin, wherein the above-mentioned fluorescent substance is excited by ultraviolet light with wavelength of mainly 290 nm - 405 nm, and emits visible light having the peak wavelength within the range of 400 nm - 620 nm, wherein the above-mentioned fluorescent particles can be discriminated from foreign substances and/or bubbles in the fluid when the above-mentioned light is irradiated, and wherein the above-mentioned fluorescent particles are shaped almost spherically with the particle diameter of 10 nm - 1 mm.

According to the fluorescent particles in the present aspect, as the fluorescent particles are the mixture comprising at least a fluorescent substance and a synthetic resin, it is possible to prevent the fluorescent substance from being subjected to an external force and broken in the fluid. Hence, it is possible to prevent the fluorescent substance from attaching to or painting the object surrounding the fluid. Also, this fluorescent substance is excited by invisible ultraviolet light and emits light. Therefore, it is possible to suppress halation caused by a reflection of visible light at the object surrounding the fluid as well as a risk of the object getting painted with the fluorescent substance, subsequently getting excited by the ultraviolet light, and emitting light.

In addition, as the fluorescent particles are shaped almost spherically, they move in a regular manner in the fluid, enabling fine visualization of the fluid motion/movement. Also, as the fluorescent particles are the mixture of a fluorescent substance and a synthetic resin, it is possible to adjust the particle diameter in the range of 10 nm - 1 mm, and it is possible to select a particle diameter most suitable for the fluid type or the environment where fluid is present.

In addition, the fluorescent substance contained in the fluorescent particles is excited by not only ultraviolet light but also purple-colored visible light and emit light. Therefore, when the invisible ultraviolet light is irradiated, it is possible to suppress the halation which would be caused by a reflection of visible light at the object surrounding the fluid and to finely visualize the fluid motion/movement. On the other hand, when the purple-colored visible light is irradiated, the fluorescent particles are excited and emit the light in a different color than that of the irradiated purple-colored visible light, but foreign substances and/or bubbles in the fluid reflect the purple-colored visible light as it is. Hence, the fluorescent particles can be discriminated from foreign substances and/or bubbles and enable observation and inspection of possible ingress of foreign substances in the fluid and/or possible gas generation if the fluid is a liquid.

In addition, by using plural types of fluorescent substances, a previously impossible, completely new visualization technique is realized, such as simultaneous shooting of the behaviors of different fluids by one ultraviolet light source.

In the fluorescent particles in another aspect of the present invention, the above-mentioned fluorescent substance comprises red-light emitting europium-based compounds shown in any one of the following chemical formulae 1 - 5.

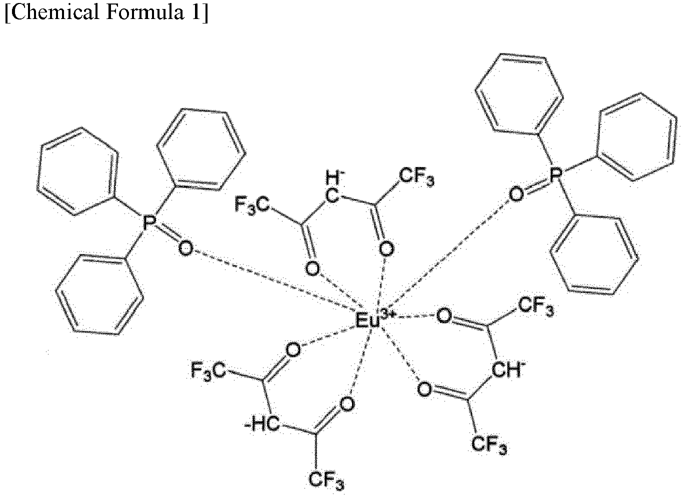

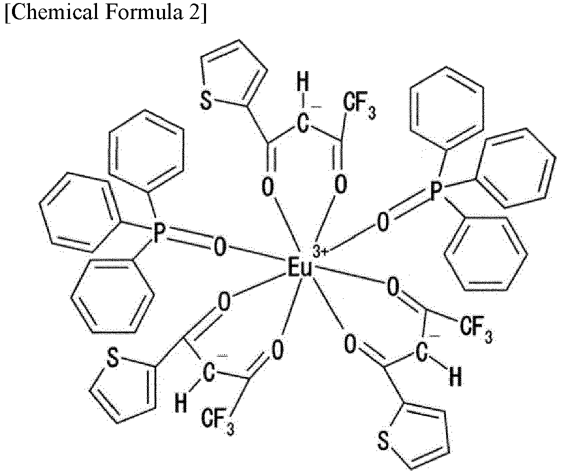

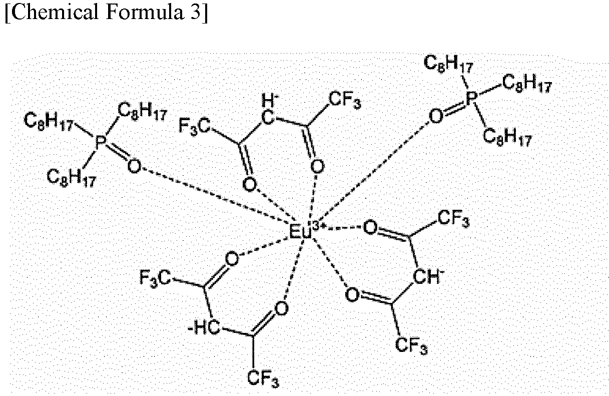

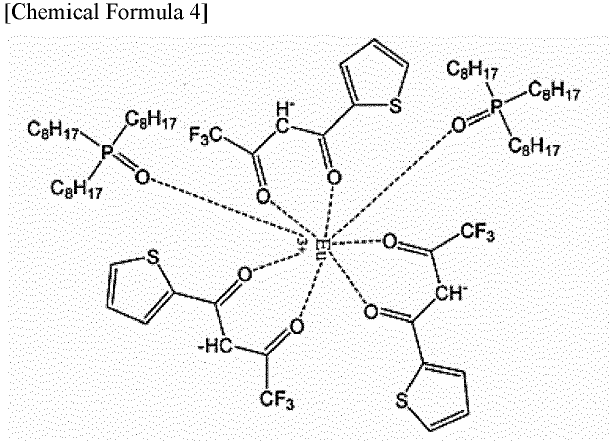

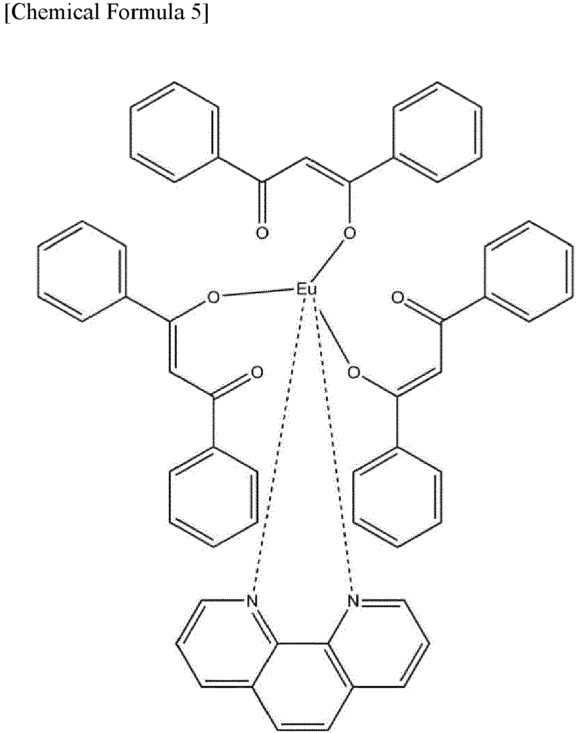

In the fluorescent particles in another aspect of the present invention, the above-mentioned fluorescent substance comprises blue-light emitting naphthalene-based compounds shown in the following chemical formula 6.

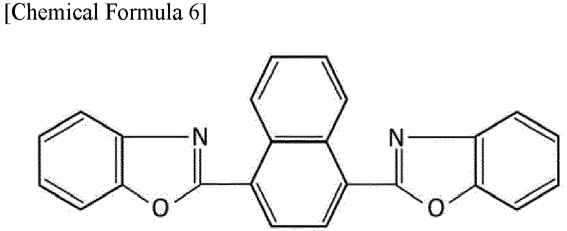

In the fluorescent particles in another aspect of the present invention, the above-mentioned fluorescent substance comprises green-light emitting terbium-based compounds shown in the following chemical formula 7 or 8.

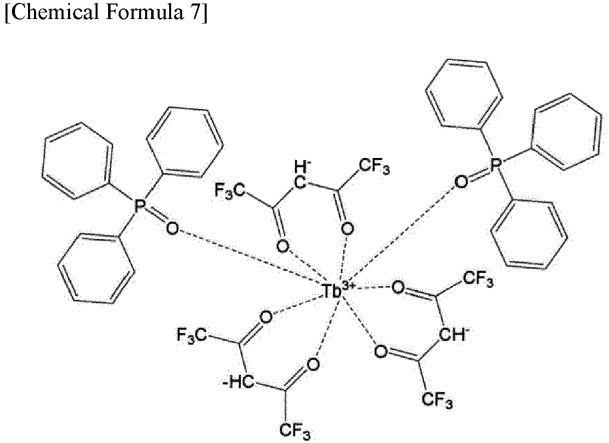

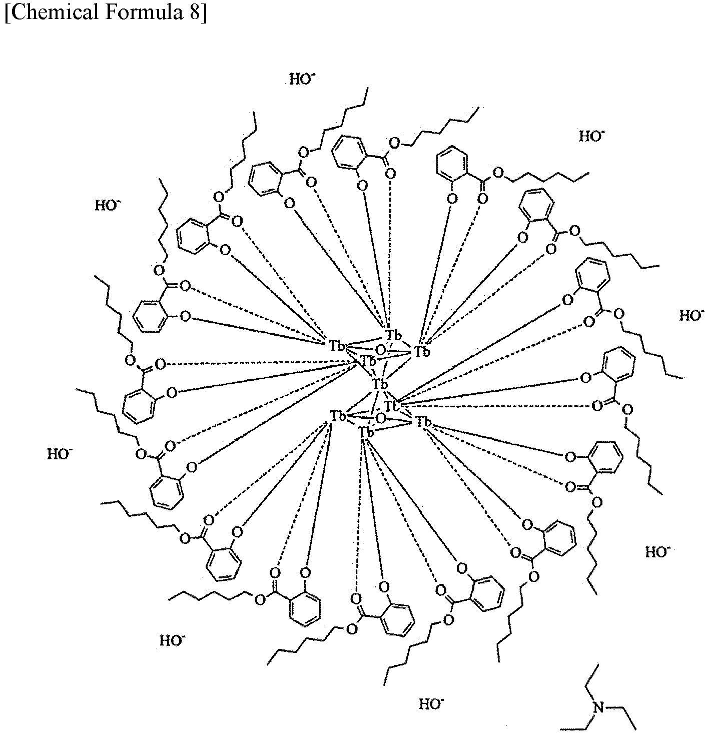

In the fluorescent particles in another aspect of the present invention, the above-mentioned fluorescent substance comprises green-light emitting quinoline-based compounds shown in the following chemical formula 9.

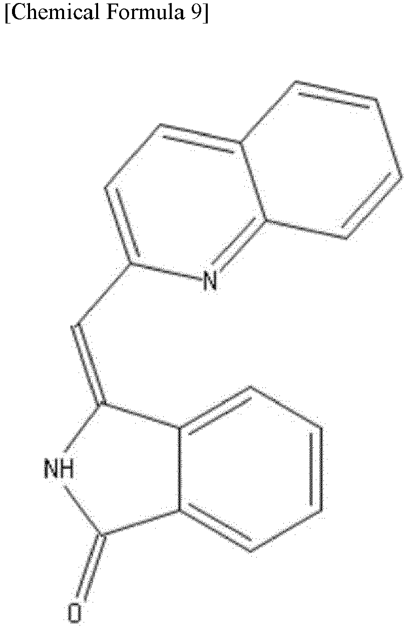

The above-mentioned europium-based compounds, naphthalene-based compounds, terbium-based compounds, and quinoline-based compounds have excellent luminescent ability under irradiation of ultraviolet lights as well as purple-colored visible light and can maintain the luminescent ability for a long time. Therefore, they are also preferably usable when long observation/inspection is necessary. Also, the excellent luminescent ability enables easy discrimination from foreign substances and/or bubbles in the fluid.

The fluorescent particles in another aspect of the present invention have the true density of 0.95 g/m³ - 1.58 g/m³.

According to the fluorescent particles in this aspect, the true density is possible to set in the range of 0.95 g/m³ - 1.58 g/m³. Setting the true density of the fluorescent particles close to the value of the true density of the fluid allow the fluorescent particles to easily disperse in the fluid and move in a regular manner in the fluid, enabling fine visualization of the fluid motion/movement.

In the fluorescent particles in another aspect of the present invention, the above-mentioned synthetic resin is one or more thermosetting resin or thermoplastic resin selected from the group consisting of: acrylic, polystyrene, ABS, polyurethane, or melamine.

According to the fluorescent particles in this aspect, it is possible to adjust the true density of the fluorescent particles by using plural thermosetting resins or thermoplastic resins of such types and altering the blending amounts.

An inspection device in one aspect of the present invention pertains to an inspection device for visualizing and inspecting fluid motion/movement in locations where fluid is present, comprising: the above-mentioned fluorescent particles; one or more light source which irradiates light with the ultraviolet wavelength of mainly 290 nm - 405 nm; a lens which focuses or disperses ultraviolet light or visible light irradiated from the above-mentioned light source; and an imaging part which shoots the locations where fluid is present.

According to the inspection device in this aspect, in order to visualize and inspect the fluid motion/movement in locations where fluid is present, it is possible to finely visualize and inspect the fluid motion/movement by using any of the fluorescent particles described above, as the fluorescent particles move in a regular manner in the fluid, while preventing the object surrounding the fluid from getting painted with the fluorescent substance and suppressing halation caused by a reflection of visible lights at the object surrounding the fluid.

In the inspection device in another aspect of the present invention, the above-mentioned fluorescent particles comprise first fluorescent particles, and second fluorescent particles which emit lights in a different color than what the first fluorescent particles do, and neither the first fluorescent particles nor the second fluorescent particles are mixed with the other.

In the inspection device in yet another aspect of the present invention, the above-mentioned fluorescent particles further comprise third fluorescent particles which emit light in another different color than what the first fluorescent particles and the second fluorescent particles do, and none of the first fluorescent particles, the second fluorescent particles or the third fluorescent particles is mixed with any of the others.

According to the inspection device in these aspects, the fluorescent particles comprise plural fluorescent particles which respectively emit light in different colors, and none of these fluorescent particles emitting light in respective different colors is mixed with any of the others. Therefore, in case of a multiphase flow where plural fluids are mixed together, by blending into each fluid the fluorescent particles which emit light in a different color than others, it is possible to trace respective emitted colors of the fluorescent particles without turbidity, even after the plural fluids are mixed together.

An inspection method in one aspect of the present invention pertains to the inspection method for visualizing and inspecting fluid motion/movement in locations where fluid is present, comprising: (A) blending the above-mentioned fluorescent particles into locations where fluid is present; (B) irradiating ultraviolet light with wavelength of mainly 290 nm - 405 nm to the fluid blended with the above-mentioned fluorescent particles; and (C) observing visible light emitted from the above-mentioned fluorescent particles.

According to the inspection method in this aspect, because the fluid motion/movement is visualized and inspected in locations where fluid is present with the use of any of the fluorescent particles described above, it is possible to finely visualize and inspect the fluid motion/movement, as the fluorescent particles move in a regular manner in the fluid, while preventing the object surrounding the fluid from getting painted with the fluorescent substance and suppressing halation caused by a reflection of visible light at the object surrounding the fluid.

In the inspection method in another aspect of the present invention, the above-mentioned fluorescent particles comprise first fluorescent particles, and second fluorescent particles which emit light in a different color than the first fluorescent particles do, and the above-mentioned step (A) comprises: (a1) blending the first fluorescent particles into a first fluid; and (a2) blending the second fluorescent particles into a second fluid, and further comprises (D1) mixing the first fluid blended with the first fluorescent particles and the second fluid blended with the second fluorescent particles.

In the inspection method in yet another aspect of the present invention, the above-mentioned fluorescent particles comprise the first fluorescent particles, the second fluorescent particles which emits light in a different color than the first fluorescent particles do, and third fluorescent particles which emit light in another different color than what the first fluorescent particles and the second fluorescent particles do, and the above-mentioned step (A) comprises: (a1) blending the first fluorescent particle into a first fluid; (a2) blending the second fluorescent particle into a second fluid; and (a3) blending the third fluorescent particle into a third fluid, and further comprises (D2) mixing the first fluid blended with the first fluorescent particles, the second fluid blended with the second fluorescent particles, and the third fluid blended with the third fluorescent particles.

According to the inspection method in these aspects, the inspection method comprises plural fluorescent particles which respectively emit light in different colors and blends these fluorescent particles into different fluids respectively. Therefore, it is possible to trace respective emitted colors of the fluorescent particles without turbidity, even after the plural fluids are mixed together.

The inspection method in another aspect of the present invention further comprises (E) detecting foreign substances and/or bubbles in the fluid under the irradiation of the above-mentioned light.

According to the inspection method in this aspect, as the fluorescent particle can be discriminated from foreign substances and/or bubbles, this inspection method enables observation and inspection of possible ingress of foreign substances in the fluid and/or possible gas generation if the fluid is a liquid, in addition to the fine visualization and inspection of the fluid motion/movement.

In the inspection method in another aspect of the present invention, the above-mentioned step (C) uses the imaging part for the observation.

According to the inspection method in this aspect, as observation is made with the use of the imaging part, it is possible to visualize and inspect the fluid motion/movement more finely, by changing the recording speed (the number of recorded images per second) of the movie for recording. Also, it is possible to intensify the emitted color of the fluorescent particles by adjusting the brightness of the recorded movie.

### [Effect of the Invention]

The present invention can provide fluorescent particles for finely visualizing the fluid motion/movement, which move in a regular manner in the fluid, while preventing the object surrounding the fluid from getting painted with the fluorescent substance and suppressing halation caused by a reflection of visible light at the object surrounding the fluid; an inspection device using the fluorescent particles for visualizing and inspecting the fluid motion/movement in locations where fluid is present; and an inspection method using the fluorescent particles for visualizing and inspecting the fluid motion/movement in locations where fluid is present.

Also, the fluorescent particles of the present invention can be discriminated from foreign substances and/or bubbles and enable observation and inspection of possible ingress of foreign substances in the fluid and/or possible gas generation if the fluid is a liquid.

### [BRIEF DESCRIPTION OF DRAWINGS]

[FIG. 1] FIG. 1 is an SEM image of the fluorescence particles according to an embodiment of the present invention.
[FIG.2] FIG.2 is an SEM image of crystals of a light-emitting substance (Chemical formula 1) comprised in the fluorescence particles according to an embodiment of the present invention.
[FIG.3] FIG.3 is an SEM image of crystals of a light-emitting substance (Chemical formula 2) comprised in the fluorescence particles according to an embodiment of the present invention.
[FIG.4] FIG.4 is an SEM image of crystals of a light-emitting substance (Chemical formula 5) comprised in the fluorescence particles according to an embodiment of the present invention.
[FIG.5] FIG.5 is an SEM image of crystals of a light-emitting substance (Chemical formula 6) comprised in the fluorescence particles according to an embodiment of the present invention.
[FIG.6] FIG.6 is an SEM image of crystals of a light-emitting substance (Chemical formula 7) comprised in the fluorescence particles according to an embodiment of the present invention.
[FIG.7] FIG.7 is an SEM image of crystals of a light-emitting substance (Chemical formula 8) comprised in the fluorescence particles according to an embodiment of the present invention.
[FIG.8] FIG.8 is an SEM image of crystals of a light-emitting substance (Chemical formula 9) comprised in the fluorescence particles according to an embodiment of the present invention.
[FIG. 9A] FIG. 9A is a schematic view showing the inspection method according to an embodiment of the present invention.
[FIG. 9B] FIG. 9B is a schematic view showing the inspection method according to an embodiment of the present invention.
[FIG. 9C] FIG. 9C is a schematic view showing the inspection method according to an embodiment of the present invention.
[FIG. 10A] FIG. 10A is a schematic view showing the process of discriminating the fluorescent particles from foreign substances and/or bubbles in the fluid, in the inspection method according to an embodiment of the present invention.
[FIG. 10B] FIG. 10B is a schematic view showing the process of discriminating the fluorescent particles from foreign substances and/or bubbles in the fluid, in the inspection method according to an embodiment of the present invention.
[FIG. 10C] FIG. 10C is a schematic view showing the process of discriminating the fluorescent particles from foreign substances and/or bubbles in the fluid, in the inspection method according to an embodiment of the present invention.
[FIG. 11A] FIG. 11A is a schematic view showing the visualization of a fluid motion/movement, when a droplet is added dropwise with the use of two fluorescent particles emitting light in different colors, in the inspection method according to an embodiment of the present invention.
[FIG. 11B] FIG. 11B is a schematic view showing the visualization of a fluid motion/movement, when a droplet is added dropwise with the use of two fluorescent particles emitting light in different colors, in the inspection method according to an embodiment of the present invention.
[FIG. 11C] FIG. 11C is a schematic view showing the visualization of a fluid motion/movement, when a droplet is added dropwise with the use of two fluorescent particles emitting light in different colors, in the inspection method according to an embodiment of the present invention.
[FIG. 11D] FIG. 11D is a schematic view showing the visualization of a fluid motion/movement, when a droplet is added dropwise with the use of two fluorescent particles emitting light in different colors, in the inspection method according to an embodiment of the present invention.
[FIG. 12] FIG. 12 is a schematic view showing the visualization of a multiphase flow of the fluid with the use of three fluorescent particles emitting light in different colors, in the inspection method according to an embodiment of the present invention.
[FIG. 13A] FIG. 13A shows an excitation spectrum and a fluorescent spectrum of the fluorescent particles according to an embodiment of the present invention.
[FIG. 13B] FIG. 13B shows an excitation spectrum and a fluorescent spectrum of the fluorescent particles according to an embodiment of the present invention.
[FIG. 13C] FIG. 13C shows an excitation spectrum and a fluorescent spectrum of the fluorescent particles according to an embodiment of the present invention.

### [DETAILED DESCRIPTION OF THE INVENTION]

Hereinafter, fluorescent particles according to the present invention, an inspection device using the fluorescent particles for visualizing and inspecting fluid motion/movement in locations where fluid is present, and an inspection method using the fluorescent particles for visualizing and inspecting fluid motion/movement in locations where fluid is present, are described in detail with reference to drawings.

The term "fluid" herein refers to what is in the form of liquid, gas, or gas-liquid mixture.

The description "fluid motion/movement" herein refers to a flow, stream, and migration of a fluid. Also, if, for example, polar solvents are mixed with each other or non-polar solvents are mixed with each other, respective resulting solvents are miscible, however, if polar solvent and non-polar solvent are mixed with each other, each solvent separates from each other. When these plural different fluids are mixed, the process of each fluid becoming admixed with others or separating from others is also construed to be included in the meaning of "fluid motion/movement".

The lower limit of the wavelength of visible light for human is the above-mentioned to be 360 nm - 400 nm and varies between individuals. Therefore, there are plural boundaries and definitions for visible light and ultraviolet light. The "ultraviolet light" herein is defined as the light with the wavelength of 380 nm or less, based on JIS B 7079 and ISO 20473. Therefore, the light with the wavelength longer than 380 nm is construed to be visible light.

The term "object" herein is construed to be a collective term for objects contacting the fluid. The object example includes, but not limited to, a pipeline where the fluid flows or a container with the fluid inside. Alternatively, the example also includes, but are not limited to, a screw, a moving object, a prismatic or spherical structure in the fluid.

### <Fluorescent particles>

Fluorescent particles in the present embodiment are the fluorescent particles comprising a mixture including at least one fluorescent substance and a synthetic resin.

As the fluorescent particles are the mixture comprising at least a fluorescent substance and a synthetic resin, it is possible to prevent the fluorescent substance from being subjected to an external force and getting broken in the fluid. Hence, it is possible to prevent the fluorescent substance from attaching to or painting the object surrounding the fluid. Also, it is possible to suppressing a risk of the object getting painted with the fluorescent substance, and subsequently getting excited by the ultraviolet light and emitting light.

The fluorescent substance is excited by the light (ultraviolet light and purple-colored visible light) with the ultraviolet wavelength of mainly 290 nm - 405 nm and emits visible light with the peak wavelength within the range of 400 nm - 620 nm.

In other words, the fluorescent substance is excited by UV-A with the wavelength of 315 nm - 380 nm, UV-B with the wavelength of 290 nm - 315 nm, and purple-colored visible light with the wavelength longer than 380 nm and emits light.

The fluorescent particles are excited by invisible ultraviolet light and emit light. Therefore, irradiation of ultraviolet light can suppress halation caused by a reflection of visible lights at the object surrounding the fluid and to visualize the fluid motion/movement.

The fluorescent substance contained in the fluorescent particles is excited by not only ultraviolet light but also purple-colored visible light and emits light. Therefore, when the purple-colored visible light is irradiated, the fluorescent particles are excited and emit visible light in a different color than that of the irradiated purple-colored visible light, but foreign substances and bubbles in the fluid reflect the purple-colored visible light as they are. Hence, the fluorescent particles can be discriminated from foreign substances and/or bubbles and enable observation and inspection of possible ingress of foreign substances in the fluid and/or possible gas generation if the fluid is a liquid.

The fluorescent particles have the particle diameter of 10 nm - 1 mm, which is adjustable within this range.

As the particle diameter of the fluorescent particle is adjustable within the above range, it is possible, for example, to use the fluorescent particles with a smaller diameter to visualize the fluid motion/movement in a small pump such as micro-pump, and the fluorescent particles with a larger diameter to visualize the fluid motion/movement in a large reactor in a plant. Selecting a particle diameter depending on the scale of the location where each fluid is present enables easy visualization and observation of the fluid motion/movement.

The fluorescent particles preferably have a small standard deviation of particle size distribution. An example of the standard deviation of the particle size distribution is, but is not limited to, 0.5 or less. More preferable example is 0.2 or less.

Variation in particle size causes variation in the motion of the fluorescent particles in the fluid, making it difficult to visualize the fluid motion/movement finely. Making the standard deviation of particle size smaller enables a finer visualization of the fluid motion/movement.

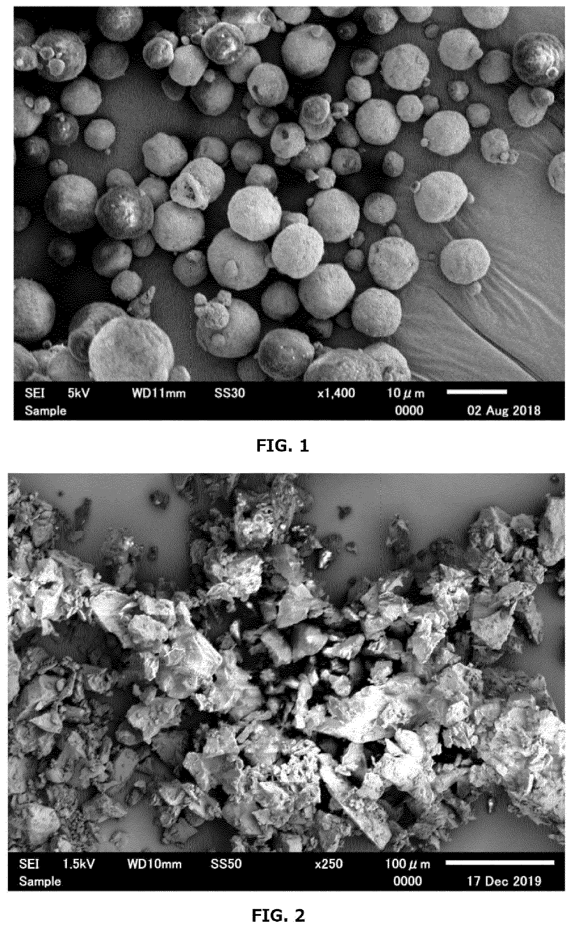

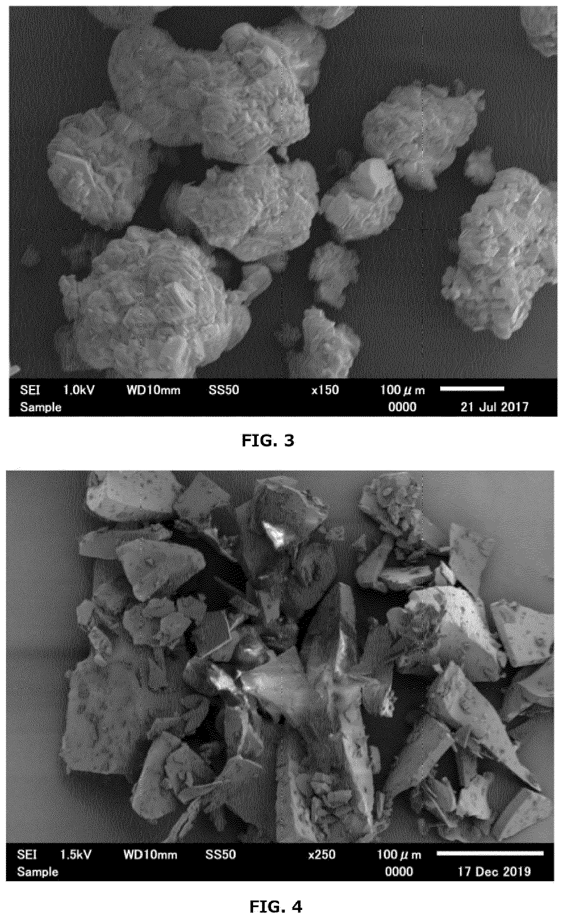

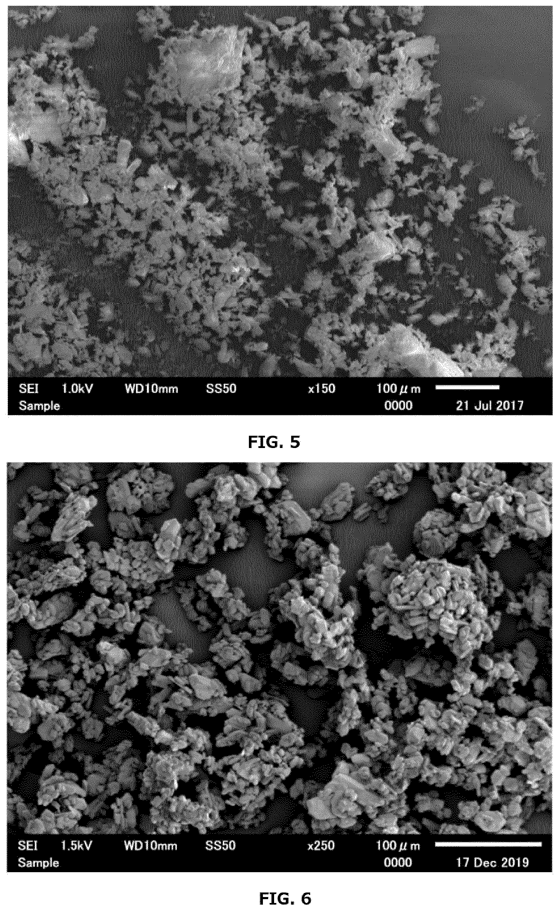

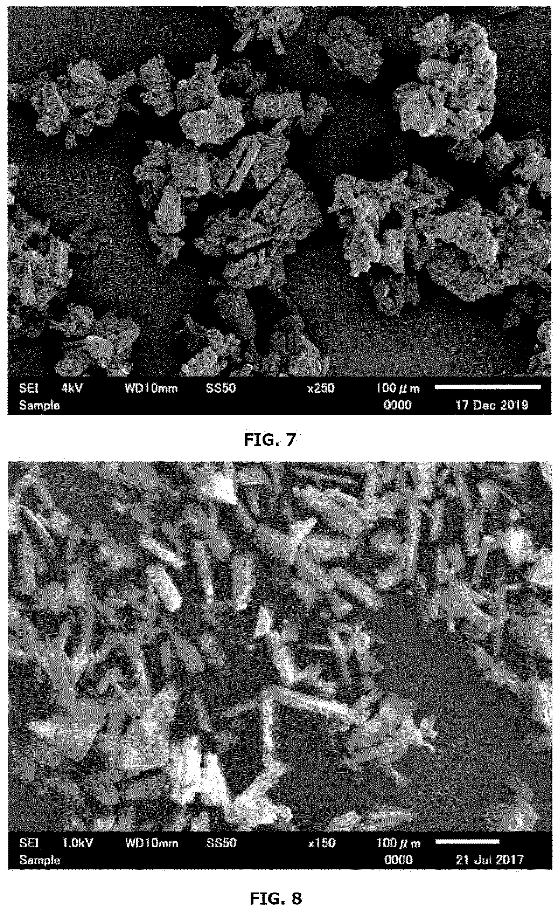

FIG. 1 shows an SEM image of the fluorescent particles. As shown in FIG. 1, a fluorescent particle has an almost spherical shape. On the other hand, the particle of the fluorescent substance has unequal sizes or crooked shapes, such as with crystal structures being cylindrical or concavo-convex. FIG. 2 shows an SEM image of a crystal of tris(1,1,1,5,5,5-hexafluoro-2,4-pentanedionato-O,O'-)bis(triphenylphosphine oxide-O-)europium (Chemical formula 1), which is one of the fluorescent substances to be mentioned later. FIG. 3 shows an SEM image of a crystal of tris(4,4,4-trifluoro-1-(2-thienyl)-1,3-butanedionato-O,O'-)bis(triphenylphosphine oxide-O-)europium (Chemical formula 2), which is one of the fluorescent substances to be mentioned later. FIG. 4 shows an SEM image of a crystal of tris(1,3-diphenyl-1,3-propanedionato)(1,10-phenanthroline)europium (III) (Chemical formula 5), which is one of the fluorescent substances to be mentioned later. FIG. 5 shows an SEM image of a crystal of 1,4-bis(2-benzoxazolyl)naphthalene (Chemical formula 6), which is one of the fluorescent substances to be mentioned later. FIG. 6 shows an SEM image of a crystal of tris(1,1,1,5,5,5-hexafluoro-2,4-pentanedionato-O,O'-)bis(triphenylphosphine oxide-O-)terbium (Chemical formula 7), which is one of the fluorescent substances to be mentioned later. FIG. 7 shows an SEM image of a crystal of [hexadecakis(hexyl salicylate)octahydroxyl]dioxononaterbium triethylamine salt (Chemical formula 8), which is one of the fluorescent substances to be mentioned later. FIG. 8 shows an SEM image of a crystal of 2-(3-oxoisoindoline-1-ylidene)methylquinoline (Chemical formula 9), which is one of the fluorescent substances to be mentioned later. It can be seen that the particles of the fluorescent substances vary in size and shape, as also shown in FIGs. 2 to 8.

If fluorescent substances are blended into a fluid as they are, as they vary in size and shape, they move irregularly in the fluid, making it difficult to visualize the fluid motion/movement finely. The present invention does not use a fluorescent substance as it is as a crystal but comprises a mixture including at least one fluorescent substance and a synthetic resin, is characterized by spherically-shaped fluorescent particles with the particle diameter of 10 nm - 1 mm, allow the fluorescent particles to move in a regular manner in the fluid, and enables fine visualization of the fluid motion/movement.

The fluorescent particles have the true density of 0.95 g/m³ - 1.58 g/m³, which is adjustable within this range.

The fluorescent particles may comprise additives for adjusting the true density.

Setting the true density of fluorescent particles close to the value of the true density of the fluid lets the fluorescent particles easily disperse in the fluid and move in the fluid in a regular manner, enabling fine visualization of the fluid motion/movement.

### <Fluorescent substance>

Preferably, the fluorescent substance included in the fluorescent particles comprises red-light emitting europium-based compounds, blue-light emitting naphthalene-based compounds, green-light emitting terbium-based compounds or quinoline-based compounds.

Europium-based compounds are europium complexes, and preferably include the following compounds: tris(1,1,1,5,5,5-hexafluoro-2,4-pentanedionato-O,O'-)bis(triphenylphosphine oxide-O-)europium; tris(4,4,4-trifluoro-1-(2-thienyl)-1,3-butanedionato-O,O'-)bis(triphenylphosphine oxide-O-)europium; tris(1,1,1,5,5,5-hexafluoro-2,4-pentanedionato-O,O'-)bis(trioctylphosphine oxide-O-)europium; tris(4,4,4-trifluoro-1-(2-thienyl)-1,3-butanedionato-O,O'-)bis(trioctylphosphine oxide-O-)europium; or tris(1,3-diphenyl-1,3-propanedionato)(1,10-phenanthroline)europium (III).

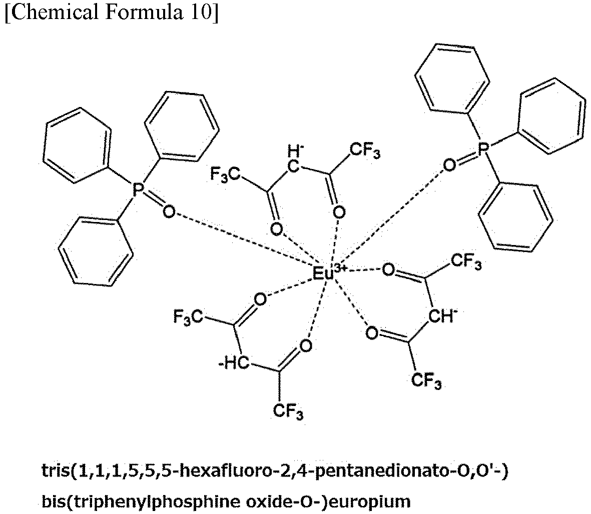

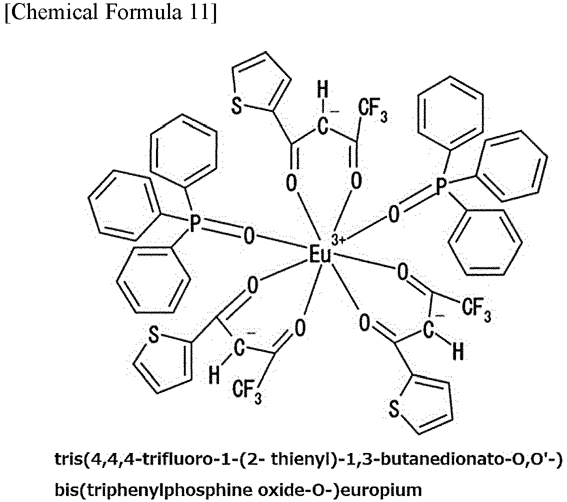

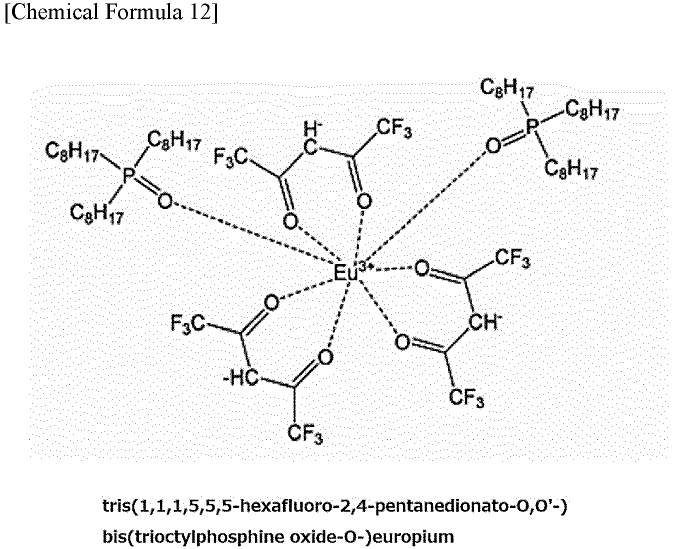

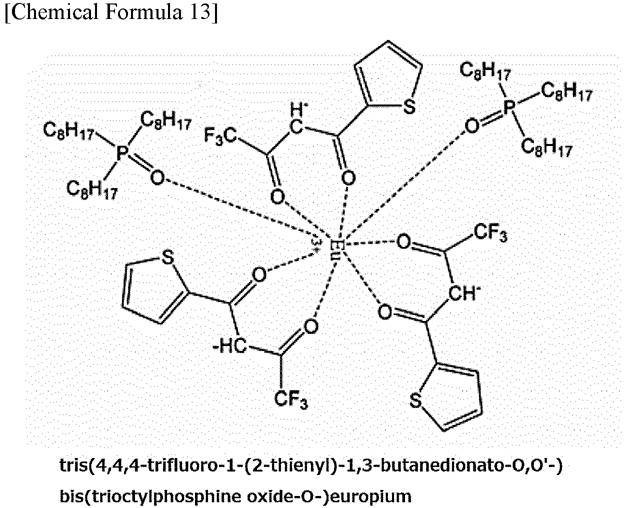

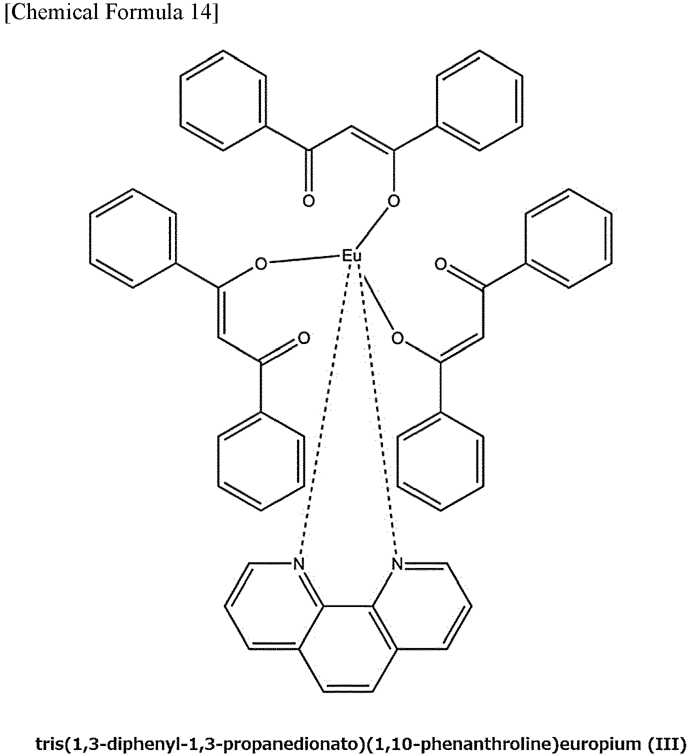

Naphthalene-based compounds are compounds comprising naphthalene, and preferably include the compound 1,4-bis(2-benzoxazolyl)naphthalene.

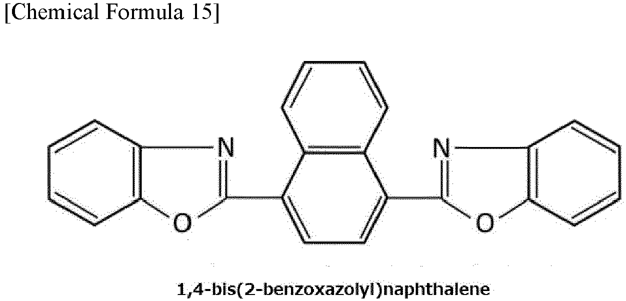

Terbium-based compounds are terbium complexes, and preferably include the following compounds: tris(1,1,1,5,5,5-hexafluoro-2,4-pentanedionato-O,O'-)bis(triphenylphosphine oxide-O-)terbium; or [hexadecakis(hexyl salicylate)octahydroxyl]dioxononaterbium triethylamine salt.

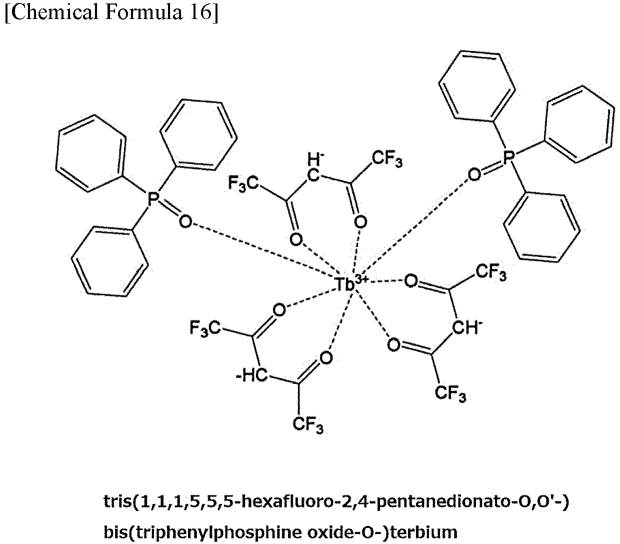

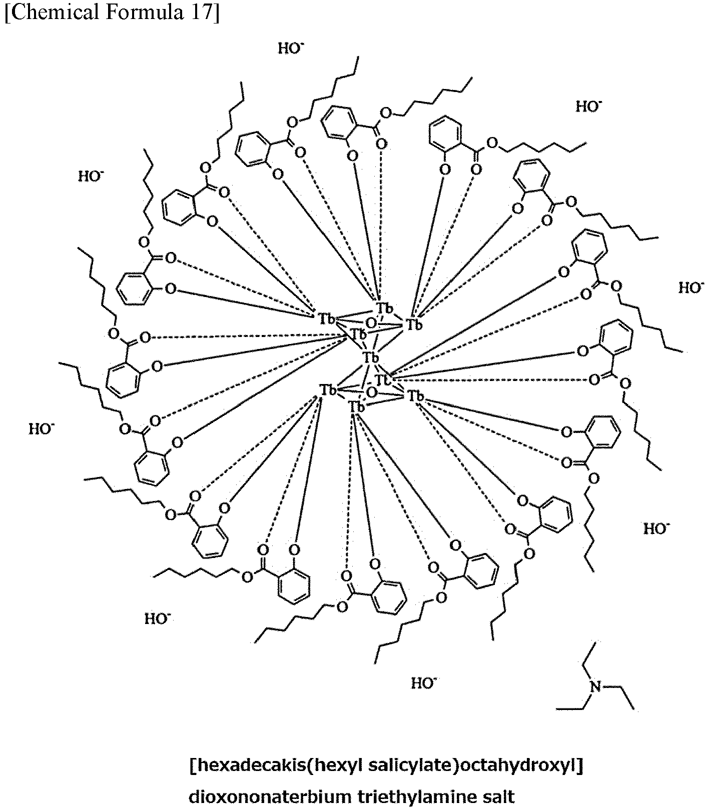

Quinoline-based compounds are compounds comprising quinoline, and preferably include the compound 2-(3-oxoisoindoline-1-ylidene)methylquinoline.

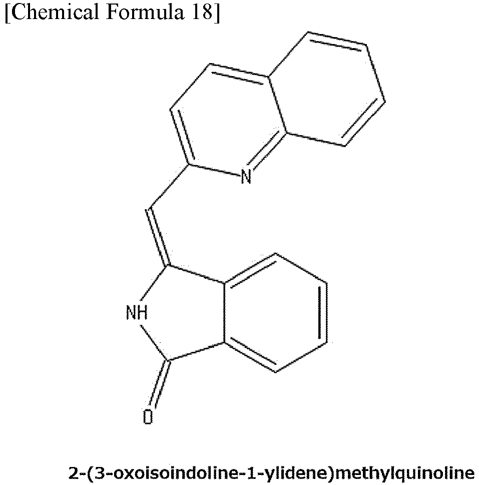

The above-mentioned europium-based compounds, naphthalene-based compounds, terbium-based compounds, and quinoline-based compounds are organic molecules which can utilize the energy from the emitted light without wasting it at all, as they absorb the light energy efficiently and get excited. Also, it has excellent light-emitting capability, and can maintain the ability for a long period of time. Therefore, it is also preferably usable when long observation/inspection is necessary. Also, the excellence in luminescent ability enables easy discrimination from foreign substances and/or bubbles in the fluid.

Furthermore, as fluorescent substance, it is possible to use, but is not limited to, anthracene-based compounds, quinacridone-base compounds, coumarin-based compounds, dicyanomethylene-based compounds, distyryl derivatives, pyrene-based compounds, perimidone derivatives, perylene-based compounds, benzopyran derivatives, benzothioxanthene derivatives, polyalkylthiophene derivatives, polydialkyl fluorene derivatives, polyparaphenylene derivatives, rubrene-based compounds, rhodaminine-based compounds, and rhodamine derivatives, etc.

### <Synthetic resin>

For synthetic resin contained in the fluorescent particles, it is possible to use thermosetting resin or thermoplastic resin. For thermosetting resin or thermoplastic resin, it is possible to use one or more selected from a group consisting of acrylic, polystyrene, ABS (acrylonitrile-butadiene-styrene copolymer), polyurethane, melamine, nylon, polyethylene, polypropylene, polyvinyl chloride, polyvinyl acetate, AS (acrylonitrile-styrene copolymer), polymethyl methacrylate resin, polycarbonate, and polyester.

It is possible to adjust the true density of the fluorescent particles by using such types of multiple thermosetting resins or thermoplastic resins and altering the blending amount.

It is more preferable to use one or more thermoplastic resin selected from a group consisting of acrylic, polystyrene, ABS (acrylonitrile-butadiene-styrene copolymer), polyurethane, nylon, polyethylene, polypropylene, polyvinyl chloride, polyvinyl acetate, AS (acrylonitrile-styrene copolymer), polymethyl methacrylate resin, or polycarbonate. It is even more preferable that it is possible to use one or more thermoplastic resin selected from a group consisting of acrylic, polystyrene, ABS (acrylonitrile-butadiene-styrene copolymer), and polyurethane.

The thermoplastic resin, after being mixed with the fluorescent particles, is used to facilitate formation of a fluorescent particle into an almost spherical shape.

### <Inspection device>

An inspection device in the present embodiment is the inspection device for visualizing and inspecting fluid motion/movement in locations where fluid is present.

The inspection device comprises any of the above-mentioned fluorescent particles.

The inspection device visualizes and inspects the fluid motion/movement in locations where fluid is present, by using any of the above-mentioned fluorescent particles. Therefore, it is possible to finely visualize and inspect the fluid motion/movement by the fluorescent particles moving in a regular manner in the fluid, while preventing the object surrounding the fluid from getting painted with the fluorescent substance and suppressing halation caused by a reflection of visible light at the object surrounding the fluid.

Also, this inspection device does not need to include an optical filter, because it is possible to prevent the object from getting painted with the fluorescent substances and getting excited by invisible lights as well as emitting lights, and because it is also possible to suppress halation caused by a reflection of visible lights at the object surrounding the fluid. Therefore, this inspection device can visualize the fluid motion/movement without degrading visibility.

The fluorescent particles included in the inspection device comprise first fluorescent particles, and second fluorescent particles which emit light in a different color than what the first fluorescent particles do, and each of the first fluorescent particles and the second fluorescent particles could be the ones not mixed with the other. Alternatively, the fluorescent particles included in the inspection device comprise third fluorescent particles which emit light in a different color than what the first and the second fluorescent particles do, and each of the first fluorescent particles, the second fluorescent particles and the third fluorescent particles could be the ones not mixed with any of the others. They further comprise the fourth and the fifth fluorescent particles having a different emitted color from each other's, which could be the ones not mixed with each other.

The fluorescent particles included in the inspection device comprise plural fluorescent particles which respectively emit light in different colors, and none of the fluorescent particles emitting different colors can be mixed with any of the others. In this case with a multiphase flow where plural fluids are mixed together, by blending into each fluid the fluorescent particles which emit light in a different color than others, it is possible to trace respective emitted colors of the fluorescent particles without turbidity, even after the plural fluids are mixed together.

The inspection device comprises one or more light source which irradiates light (ultraviolet light or visible light) with the ultraviolet wavelength of mainly 290 nm - 405 nm.

As a light source, preferably, it is possible to use, but is not limited to, a laser device. Also, as a wavelength of the lights possible to irradiate by a device is fixed, the laser device may comprise plural light sources, such as, one laser device to irradiate ultraviolet lights and another to irradiate visible lights.

The inspection device comprises a lens which focuses or diffuses ultraviolet light or visible light irradiated from the light source.

By providing the device with the lens, it is possible to focus light in locations where the fluid for visualization is present. Alternatively, by diffusing light and irradiating the light in a wider range, it is possible to visualize the fluid motion/movement in wide ranges of locations where fluid is present.

The inspection device comprises an imaging part which shoots the locations where fluid is present.

By the use of the imaging part, it is possible to record a movie of the visualized fluid motion/movement. By changing the recording speed (the number of recorded images per second) of the movie for recording, it is possible to visualize and inspect the fluid motion/movement even more finely.

Furthermore, it is possible to intensify the color of the light emitted by the fluorescent particles by adjusting the brightness of the recorded movie. For example, when the first fluid blended with the fluorescent particles emitting red light and the second fluid blended with the fluorescent particles emitting green light are mixed together, intensifying the red color makes it easier to trace the motion/movement of the first fluid after mixing. Also, when purple-colored visible lights are irradiated from the light source, intensifying the purple color allows to emphasize foreign substances and/or bubbles in the fluid.

### <Inspection method>

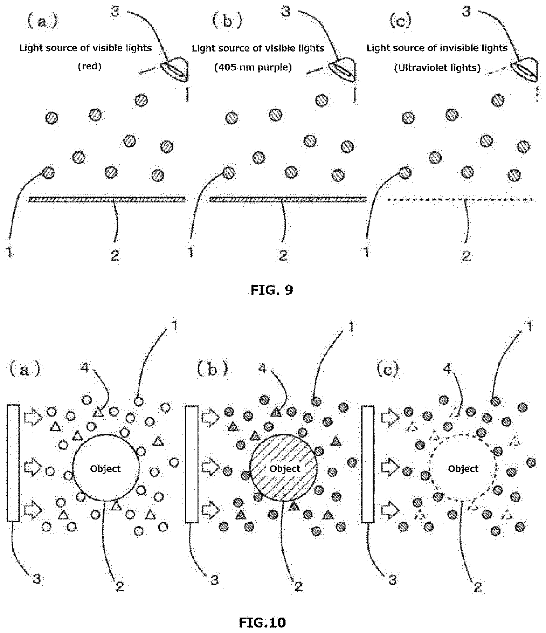

FIGs. 9A to 9C - FIG. 12 are schematic views showing the inspection method for visualizing and inspecting the fluid motion/movement in locations where fluid is present, in accordance with plural embodiments of the present invention.

The inspection method includes blending any of the above-mentioned fluorescent particles (1) into locations where fluid is present.

This inspection method visualizes and inspects the fluid motion/movement in locations where fluid is present, by using any of the above-mentioned fluorescent particles (1).

The inspection method comprises irradiating light with the ultraviolet wavelength of mainly 290 nm - 405 nm (ultraviolet light or purple-colored visible light) to the fluid blended with the fluorescent particles (1). In this step, it is preferable that a laser device, not limitedly, is used as the light source (3).

The inspection method includes observing the visible light emitted from the fluorescent particles (1).

As shown in FIG. 9A, when visible light with the wavelength longer than 405 nm (for example the one in red color with the wavelength of 650 nm) are irradiated from the light source (3), the fluorescent particles (1) are not excited but reflect the visible light from the light source (3) as they are. Therefore, fluorescent particles (1) are visually recognized in the same color as that of the object (2).

As shown in FIG. 9B, when purple-colored visible light is irradiated from the light source (3), the fluorescent particles (1) are excited and emit light, and visually recognized in a color emitted by the fluorescent particles (1). On the other hand, the object (2) is visually recognized in purple, as it reflects the purple-colored visual light from the light source (3) as it is. As such, fluorescent particle (1) and the object (2) can be clearly discriminated, and the movement of the object (2), if affecting the fluid motion/movement, enables visualization of the fluid motion/movement, as well as observation and inspection of the object (2) movement.

As shown in FIG. 9C, in this inspection method, when ultraviolet light are irradiated from the light source (3), it is possible to prevent the object (2) from getting painted with the fluorescent substances and getting excited by the invisible light as well as emitting light, and to suppress halation caused by a reflection of visible light at the object (2) surrounding the fluid, and thus, it becomes easy to observe the boundary layer in the extreme proximity to the object (2) and the fluid.

Also, in this inspection method, it is possible to prevent the object (2) from getting painted with the fluorescent substances, and thus, it becomes easy to clean the object (2) after the inspection.

Also, this inspection method does not need to comprise an optical filter, because it is possible to prevent the object (2) from getting painted with the fluorescent substances and getting excited by invisible light as well as from emitting light, and because it is also possible to suppress halation caused by a reflection of visible light at the object (2) surrounding the fluid. Therefore, this inspection method can visualize the fluid motion/movement without degrading visibility.

The inspection method may further comprise detecting foreign substances and/or bubbles (4) in fluid under light irradiation as shown in FIGs. 10A to 10C.

As shown in FIG. 10A, when visible light with the wavelength longer than 405 nm is irradiated from the light source (3), the fluorescent particles (1) are not excited but reflect the visible light from the light source (3) as it is. Therefore, fluorescent particles (1), the object (2) and foreign substances and/or bubbles (4) are all visually recognized in the same color.

As shown in FIG. 10B, when purple-colored visible light is irradiated from the light source (3), the fluorescent particles (1) are excited and emit light, and visually recognized in a color emitted by the fluorescent particles (1). On the other hand, the object (2), and foreign substances and/or bubbles (4) are visually recognized in purple, as they reflect the purple-colored visible light from the light source (3) as it is. As such, fluorescent particles (1), and foreign substances and/or bubbles (4) can be clearly discriminated.

As shown in FIG. 10C, when ultraviolet light is irradiated from the light source (3), it is not possible to visually recognize the object (2), and foreign substances and/or bubbles (4), but it is possible to visually recognize only the fluorescent particles (1) which are excited and emitting colors. Hence, this inspection method enables observation and inspection of possible ingress of foreign substances in the fluid and/or possible gas generation if the fluid is a liquid.

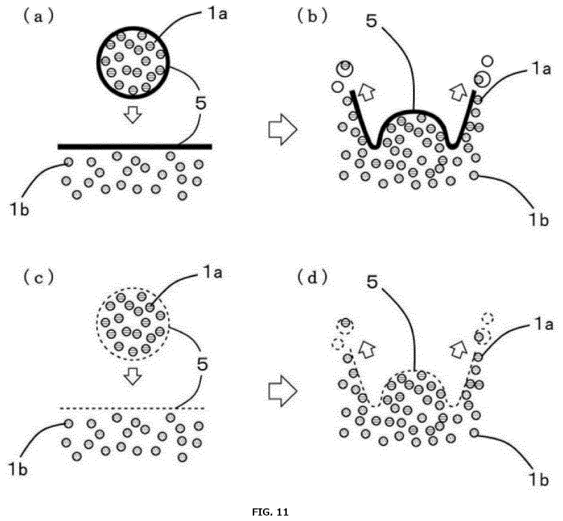

As shown in FIGs. 11A to 11D, the fluorescent particles (1) used in the inspection method may comprise first fluorescent particles (1a), and second fluorescent particles (1b) which emit light in a different color than what the first fluorescent particles (1a) do. In this case, the inspection method comprises blending first fluorescent particles (1a) into a first fluid, blending second fluorescent particles (1b) into a second fluid, and mixing the first fluid blended with the first fluorescent particles (1a) and the second fluid blended with the second fluorescent particles (1b).

FIGs. 11A to 11D show the steps of adding the first fluid blended with the first fluorescent particles (1a) dropwise and mixing it with the second fluid blended with the second fluorescent particles (1b).

FIGs. 11A and 11B show the cases when purple-colored lights are irradiated, where first fluorescent particles (1a) and second fluorescent particles (1b) emit light and are visually recognized in different colors respectively. FIG. 11A and FIG. 11B are schematic views of before and immediately after adding a droplet dropwise respectively. Purple-colored visible light then reflects at the fluid surface (5) of the first fluid and the second fluid. Hence, it is possible to visually recognize the fluid surface (5).

FIGs. 11C and 11D show the cases when ultraviolet light is irradiated, where first fluorescent particles (1a) and second fluorescent particles (1b) emit light and are visually recognized in different colors respectively. On the other hand, it is not possible to visually recognize the fluid surface (5), but it is easy to trace the first fluorescent particles (1a) and the second fluorescent particle (1b).

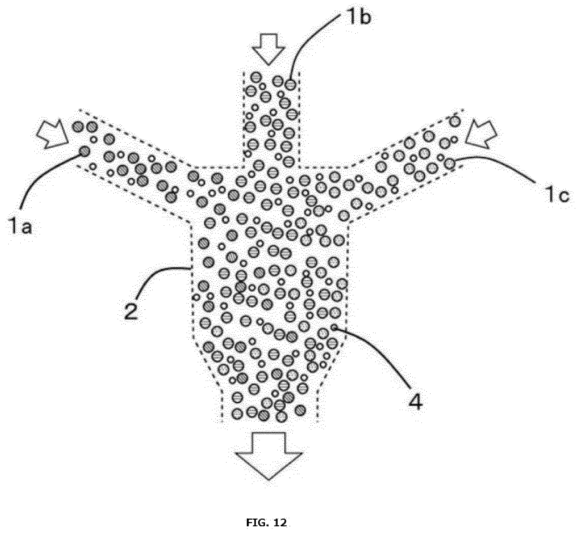

As shown in FIG. 12, fluorescent particles (1) used in the inspection method may comprise first fluorescent particles (1a), second fluorescent particles (1b) which emit light in a different color than what the first fluorescent particles (1a) do, and third fluorescent particles (1c) which emit light in a different color than what the first fluorescent particles (1a) and the second fluorescent particles (1b) do. In this case, the inspection method comprises blending the first fluorescent particles (1a) into a first fluid, blending the second fluorescent particles (1b) into a second fluid, blending the third fluorescent particles (1c) into a third fluid, and mixing the first fluid blended with the first fluorescent particles (1a), the second fluid blended with the second fluorescent particles (1b), and the third fluid blended with the third fluorescent particles (1c).

FIG. 12 is a schematic view showing visualization of multiphase flow of the fluids using the fluorescent particles (1a, 1b, 1c) emitting light in three different colors respectively, when the three different fluids are put into a conduit from three respective inlets.

FIG. 12 shows the case when ultraviolet light is irradiated, where first fluorescent particles (1a), second fluorescent particles (1b), and third fluorescent particles (1c) emit lights in different colors respectively, and are visually recognizable. On the other hand, foreign substances and/or bubbles (4) and the object (2) (conduit) are not visually recognizable.

As shown in FIG. 12, fluorescent particles (1) used in the inspection method may comprise first fluorescent particles (1a), second fluorescent particles (1b), and third fluorescent particles (1c) that emit light in different colors respectively. In this case, by blending these fluorescent particles (1a, 1b, 1c) into different fluids respectively, it is possible to trace respective emitted colors of the fluorescent particles (1a, 1b, 1c) without turbidity, even after the plural fluids are mixed together.

Fluorescent particles (1) used in the inspection method may further comprise fourth and fifth fluorescent particles having respective emitted colors.

In the step of observing the visible lights emitted from fluorescent particles (1), it is preferable to use an imaging part for the observation.

By using the imaging part, it is possible to shoot a movie of the visualized fluid motion/movement. By changing the recording speed (the number of recorded images per second) of the movie for recording, it is possible to visualize and inspect the fluid motion/movement even more finely.

Furthermore, it is possible to intensify the color of the light emitted by the fluorescent particles (1) by adjusting, for example, the brightness of the recorded movie. For example, when the first fluid blended with the first fluorescent particles (1a) emitting red light and the second fluid blended with the second fluorescent particles (1b) emitting green light are mixed together, intensifying the red color make it easier to trace the motion/movement of the first fluid after mixing. Also, when purple-colored visible light is irradiated from the light source (3), intensifying the purple color allows to emphasize foreign substances and/or bubbles (4) in fluid.

### [Examples]

Hereinafter, examples for assessing the fluorescent particles in the present invention are shown, by which the effect of the present invention is made even clearer. The present invention, however, should not be construed to be limited to the aspects illustrated in the below Examples.

### <1. Manufacture of fluorescent particle>

### (Example 1)

A mixture was prepared with 0.5% of fluorescent substance emitting blue light, Lumisys B-800 (Central Techno Corporation), and the rest which is acrylate resin. This mixture was sprayed and dried to produce fluorescent particles in an almost spherical shape with the mean particle diameter of 10 µm. The fluorescent particles were used as Example 1.

### (Example 2)

A mixture was prepared with 0.5% of fluorescent substance emitting green light, Lumisys G-3300 (Central Techno Corporation), and the rest which is acrylate resin. This mixture was sprayed and dried to produce fluorescent particles in an almost spherical shape with the mean particle diameter of 10 µm. The fluorescent particles were used as Example 2.

### (Example 3)

A mixture was prepared with 0.5% of fluorescent substance emitting red light, Lumisys E-1000 (Central Techno Corporation), and the rest which is acrylate resin. This mixture was sprayed and dried to produce fluorescent particles in an almost spherical shape with the mean particle diameter of 10 µm. The fluorescent particles were used as Example 3.

### <2. Measurements of excitation spectrum and fluorescence spectrum>

Excitation spectrum and fluorescence spectrum of the fluorescent particles of the above Examples 1-3 were measured by the spectrophotofluorometer F-4500 (Hitachi High-Technologies Corporation).

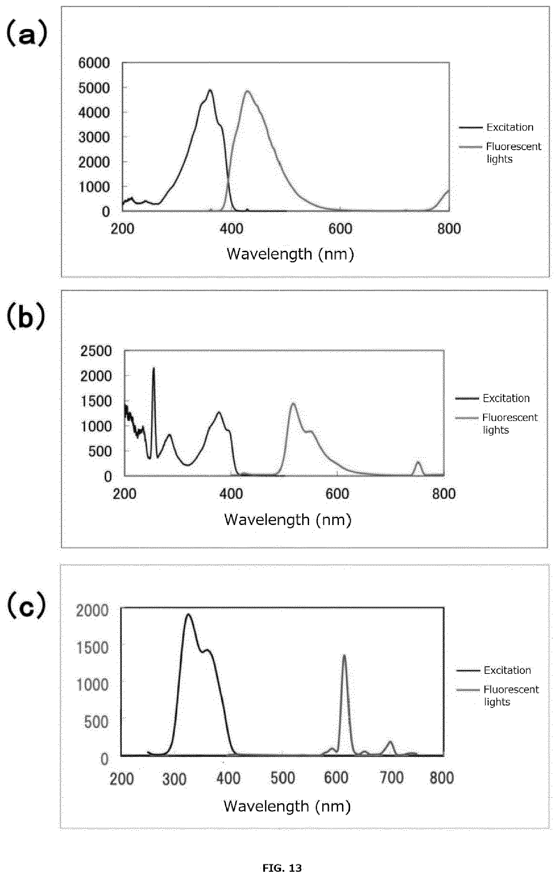

FIGs. 13A to 13C show the measurement results of the excitation spectrum and fluorescence spectrum of the fluorescent particles of Examples 1-3.

The peak wavelength of the excitation spectrum of the fluorescent particles of Example 1 shown in FIG. 13A was 361 nm, and the peak wavelength of the fluorescence spectrum was 429 nm. The peak wavelength of the excitation spectrum of the fluorescence particles of Example 2 shown in FIG. 13B was 375 nm, and the peak wavelength of the fluorescence spectrum was 510 nm. The peak wavelength of the excitation spectrum of the fluorescence particles of Example 3 shown in FIG. 13C was 326 nm, and the peak wavelength of the fluorescence spectrum was 615 nm.

It was found that the luminescence intensity of these fluorescent particles, in case of the excited light being shorter than 290 nm or longer than 405 nm, was only one-fourth of the peak wavelength of the excited light, and that it was difficult to visually recognize emitted colors of the fluorescent particles. In particular, when visible light with the wavelength longer than 405 nm in specific were irradiated, the emitted light of the fluorescent particles were not reflected, but rather, the irradiated visible lights were reflected to enable the observation of fluorescent particles in the color of the irradiated visible lights.

### <3. Visualization test for fluid motion/movement>

### (3-1. Purpose)

The fluorescent particles of Example 2 were blended into a fluid, and a visualization test for fluid motion/movement was conducted. At the same time, Comparative Example 1 was prepared by blending into the fluid the fluorescent substance Lumisys G-3300 (Central Techno Corporation) as it was, and Comparative Example 2 was prepared by blending into the fluid resin particles (polystyrene) which do not contain fluorescent substance, to conduct the visualization test for fluid motion/movement.

### (3-2. Test method)

A circular flow channel was created by connecting a transparent acrylic channel and a pump with a rotational rotor, and water was poured in it. Example 2, Comparative Example 1, or Comparative Example 2 was blended into the water. Violet laser of 405 nm and purple-colored laser of 375 nm were respectively irradiated to this water, to conduct the visualization test for fluid motion/movement.

### (3-3. Result)

In the visualization test for Example 2 with the purple-colored laser irradiated, it was possible to visualize the fluorescent particles, without the fluorescent particles attaching to the acrylic channel, having it painted or causing halation. On the other hand, with Comparative Example 1, observation was difficult due to the fluorescent particles attaching to the acrylic channel and having it painted. With Comparative Example 2, observation was not possible because Comparative Example 2 does not emit light, although halation did not occur.

Also, for Example 2 with the violet laser irradiated, foreign substances, such as dust, and bubbles in the acrylic channel, as well as halation were observed in the same purple color as the violet laser's. At that time, the use of a filter which cut off the wavelength of the purple-colored visible light made it possible to visualize only Example 2. On the other hand, with Comparative Example 1, observation of only Comparative Example 1 was difficult even with the use of the filter, due to the fluorescent particles attaching to a part of the acrylic channel and having it painted as well as the halation of the same wavelength as the fluorescent particles' caused in the painted area. With Comparative Example 2, observation of only Comparative Example 2 was not possible because all the foreign substances such as dust and bubbles, as well as the halation reflected the violet laser.

### [Industrial applicability]

The present invention can provide fluorescent particles which move in a regular manner in the fluid while preventing the object surrounding the fluid from getting painted with the fluorescent substance and suppressing halation caused by a reflection of visible light at the object surrounding the fluid, to allow for visualization of the fluid motion/movement in locations where fluid is present; an inspection device for visualizing and inspecting the fluid motion/movement in locations where fluid is present by using the fluorescent particles; and an inspection method to visualize and inspect the fluid motion/movement in locations where fluid is present by using the fluorescent particles.

### [Description of symbols]

- 1: Fluorescent particles
- 1a: first fluorescent particles
- 1b: second fluorescent particles
- 1c: third fluorescent particles
- 2: Object
- 3: Light source
- 4: Foreign substances and/or bubbles
- 5: Fluid surface

## Claims

1. Fluorescent particles comprising a mixture containing at least one fluorescent substance and a synthetic resin,
wherein said fluorescent particles are used to discriminate foreign substances and/or bubbles in a fluid when light is irradiated,
wherein said fluorescent substance is excited by ultraviolet light with wavelength of mainly 290 nm - 405 nm, and emits visible light having the peak wavelength within the range of 410 nm - 620 nm,
wherein said synthetic resin is a thermosetting resin or a thermoplastic resin,
wherein the fluorescent particles are spherically shaped with the particle diameter of 10 nm - 1 mm, and
wherein said fluorescent substance comprises europium-based compounds emitting red light shown by any one of the following chemical formulae 1 to 5, naphthalene-based compounds emitting blue light shown by the following chemical formula 6, terbium-based compounds emitting green lights shown by the following formula 7 or 8, quinoline-based compounds emitting green lights shown by a following chemical formula 9 or any combination thereof.

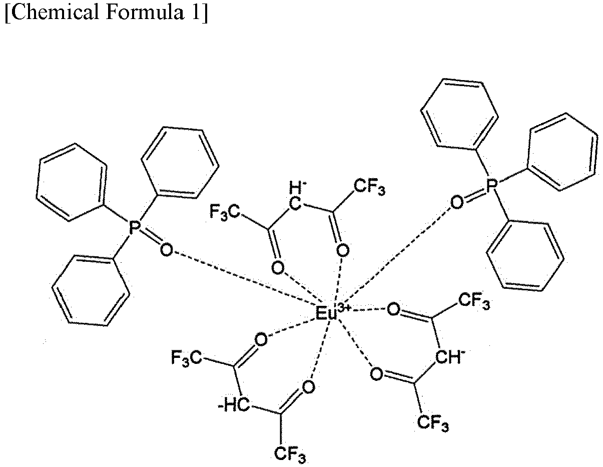

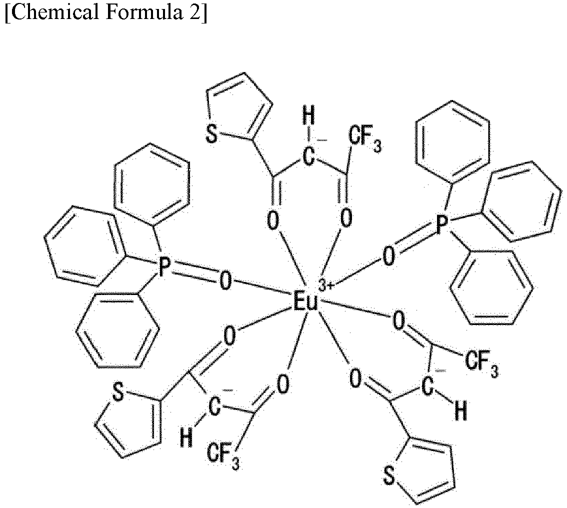

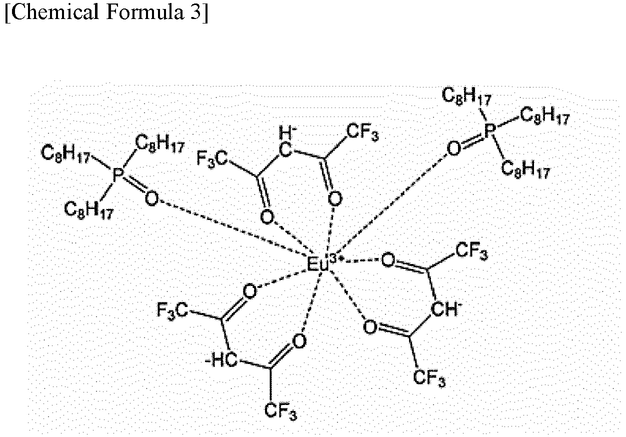

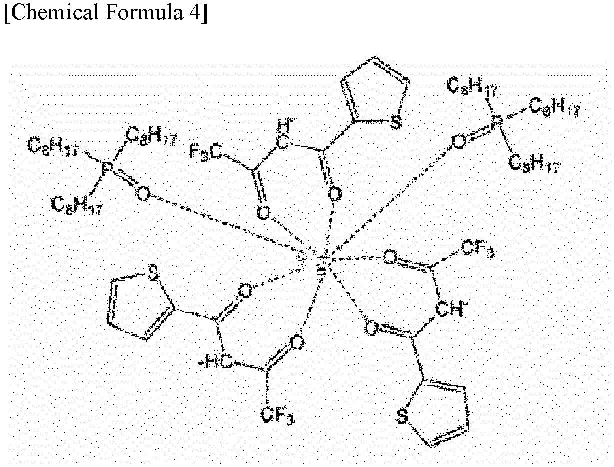

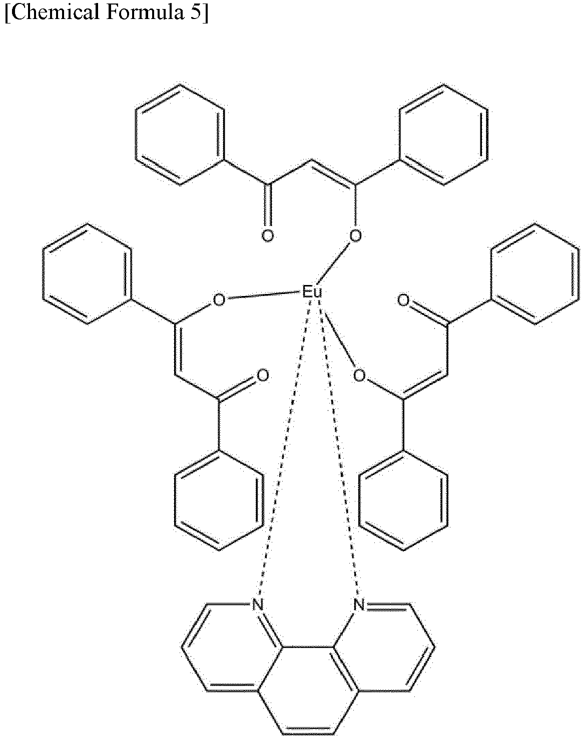

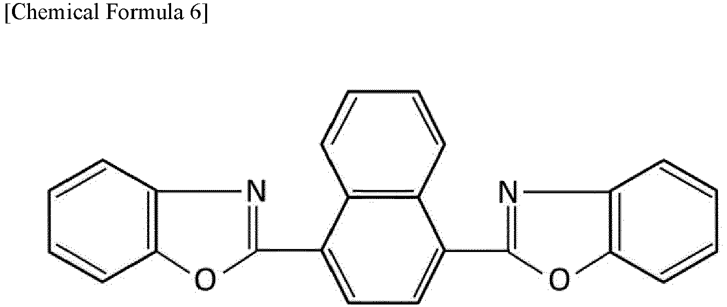

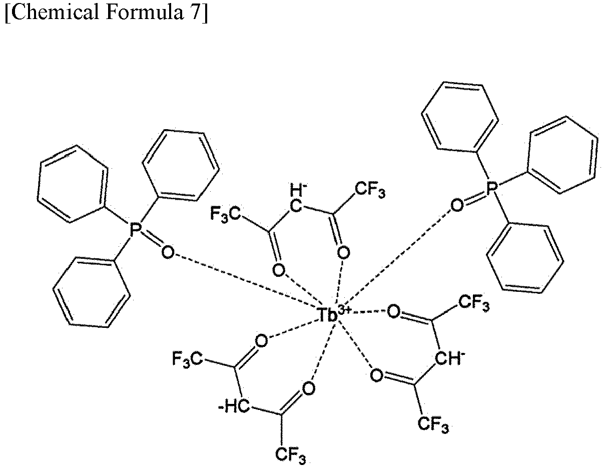

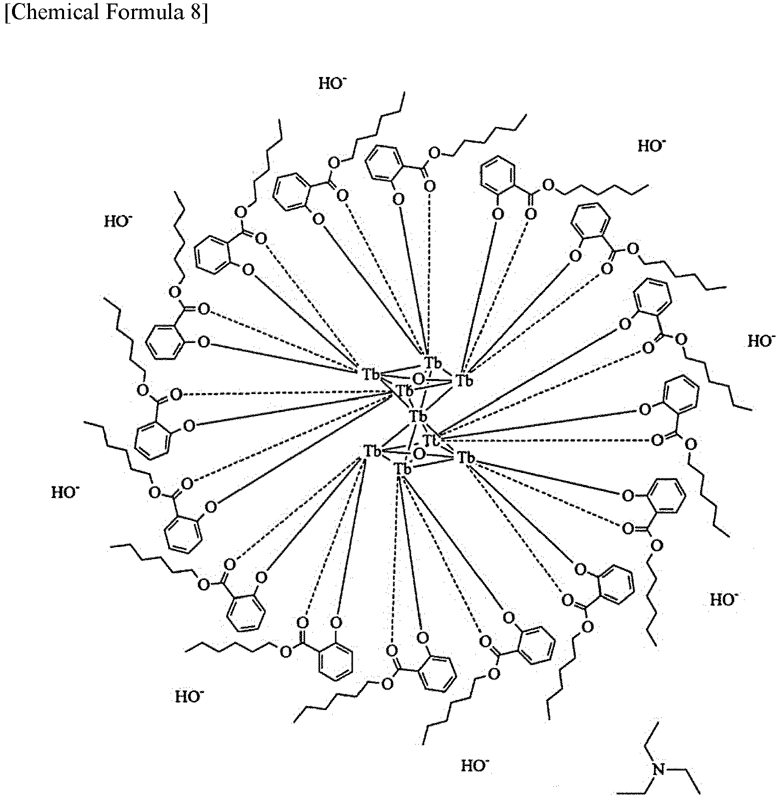

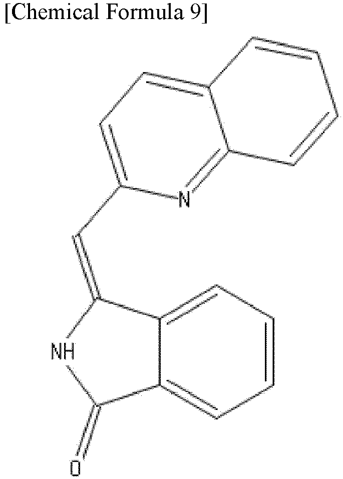

2. The fluorescent particles of claim 1, wherein the true density is 0.95 g/cm³ - 1.58 g/cm³.

3. The fluorescent particles of claim 1 or 2, wherein said synthetic resin is one or more thermosetting resin or thermoplastic resin selected from the group consisting of: acrylic, polystyrene, ABS (acrylonitrile-butadiene-styrene copolymer), polyurethane, melamine, nylon, polyethylene, polypropylene, polyvinyl chloride, polyvinyl acetate, AS (acrylonitrile-styrene copolymer), polymethyl methacrylate resin, polycarbonate, or polyester.

4. The fluorescent particles of claim 3, wherein said synthetic resin is one or more thermosetting resin or thermoplastic resin selected from the group consisting of: acrylic, polystyrene, ABS, polyurethane, or melamine.

5. An inspection device for visualizing and inspecting fluid motion/movement in locations where a fluid is present, comprising:
said fluorescent particles of any one of claims 1 to 4;
one or more light source which irradiates ultraviolet light with wavelength of mainly 290 nm - 405 nm;
a lens which focuses or disperses ultraviolet light or visible light irradiated from said light source; and
an imaging part which shoots the locations where fluid is present.

6. The inspection device of claim 5,
wherein said fluorescent particles comprise first fluorescent particles, and second fluorescent particles which emit light in a different color than what the first fluorescent particles do, and
wherein neither the first fluorescent particles nor the second fluorescent particles are mixed with the other.

7. The inspection device of claim 5,
wherein said fluorescent particles further comprise third fluorescent particles which emit light in a different color than what the first and the second fluorescent particles do; and
wherein none of the first fluorescent particles, the second fluorescent particle or the third fluorescent particles are mixed with any of the others.

8. An inspection method for visualizing and inspecting fluid motion/movement in locations where a fluid is present, comprising the steps of:
(A) blending said fluorescent particles of any one of claims 1 to 4 into locations where the fluid is present;
(B) irradiating ultraviolet light with wavelength of mainly 290 nm - 405 nm to the fluid blended with said fluorescent particles; and
(C) observing visible light emitted from said fluorescent particles.

9. The inspection method of claim 8,
wherein said fluorescent particles comprise first fluorescent particles, and second fluorescent particles which emit lights in a different color than what the first fluorescent particles do, and
wherein said step (A) further comprises:
(a1) blending the first fluorescent particles into a first fluid; and
(a2) blending the second fluorescent particles into a second fluid,
said method further comprising (D1) mixing the first fluid blended with the first fluorescent particles, and the second fluid blended with the second fluorescent particles.

10. The inspection method of claim 8,
wherein said fluorescent particles comprise the first fluorescent particles, the second fluorescent particles which emits light in a different color than the first fluorescent particles do, and third fluorescent particles which emit light in a different color than what the first fluorescent particles and the second fluorescent particles do, and
wherein said step (A) further comprises:
(a1) blending the first fluorescent particles into a first fluid;
(a2) blending the second fluorescent particles into a second fluid; and
(a3) blending the third fluorescent particles into a third fluid,
said method further comprising (D2) mixing the first fluid blended with the first fluorescent particles, the second fluid blended with the second fluorescent particles, and the third fluid blended with the third fluorescent particles.

11. The inspection method of any one of claims 8 to 10, further comprising (E) detecting foreign substances and/or bubbles in the fluid under said light irradiation.

12. The inspection method of any one of claims 8 to 11, wherein said step (C) uses the imaging part for the observation.
